# EUROPEAN PATENT SPECIFICATION

(11) **EP 3 511 631 B1**
(45) Date of publication and mention of the grant of the patent: **19.04.2023**
(21) Application number: 17848373.1
(22) Date of filing: 08.06.2017
(51) Int. Cl.: F24C 15/10, C03C 17/30, H05B 6/12

(54) **COOKING DEVICE TOP PLATE AND MANUFACTURING METHOD FOR SAME**
DECKPLATTE FÜR KOCHGERÄT UND VERFAHREN ZUR HERSTELLUNG DAVON
PLAQUE SUPÉRIEURE DE DISPOSITIF DE CUISSON ET SON PROCÉDÉ DE FABRICATION

(30) Priority: 06.09.2016 JP 2016173832
(43) Date of publication of application: 17.07.2019
(73) Proprietor: Nippon Electric Glass Co., Ltd., Otsu-shi Shiga 520-8639 (JP)
(72) Inventor: YOKOYAMA, Shohei, Otsu-shi Shiga 520-8639 (JP); KONISHI, Hirotugu, Otsu-shi Shiga 520-8639 (JP); KANAZAWA, Toshiaki, Otsu-shi Shiga 520-8639 (JP); TSUCHIYA, Takeshi, Otsu-shi Shiga 520-8639 (JP)
(74) Representative: Tetzner, Michael
(86) International application number: PCT/JP2017/021298
(87) International publication number: WO 2018/047428

(56) References cited:
- JP-A- 2003 225 165
- JP-A- 2005 298 266
- JP-A- 2010 009 958
- JP-A- 2010 009 958
- JP-A- 2010 120 846
- JP-A- 2010 120 846

## Description

### [Technical Field]

The present invention relates to cooking device top plates and methods for manufacturing the cooking device top plates.

### [Background Art]

Infrared heaters, such as a radiant heater and a halogen heater known as a high-output type heater, and electromagnetic heaters, such as an induction heater (IH), are used as heaters for cooking devices.

Heretofore, a deep-colored crystallized glass plate capable of blocking visible light and transmitting infrared light has been widely used as a top plate for a cooking device equipped with an infrared heater. The use of the deep-colored crystallized glass plate as a top plate makes it possible to hide members placed behind the top plate to improve the aesthetic aspect of the top plate and concurrently makes it possible to prevent the glare of the infrared heater that emits intense visible light.

Because in a cooking device with an infrared heater, its glowing heater section is visible through the deep-colored crystallized glass plate, the cooking device need not be specially provided with a mechanism for indicating when the cooking device is in a heating state.

On the other hand, a cooking device with an electromagnetic heater (hereinafter, referred to as an "IH cooking device"), unlike the infrared heater, generates no visible light during heat production. Therefore, the IH cooking device needs to be provided with a mechanism for indicating when the cooking device is in a heating state. For example, a light-emitting diode or the like has heretofore been used as such an indicating mechanism.

However, light from the light-emitting diode is weaker than light from the infrared heater. Therefore, for example, if a deep-colored crystallized glass plate as described above is used as a top plate for an IH cooking device, there arises a problem that the visibility of the light-emitting diode placed behind the top plate is low.

In view of the above problem, for example, JP H10 273342 A proposes to use as a top plate a low-expansion crystallized glass plate having a light shielding layer formed on its surface. Furthermore, JP H10 273342 A describes that the light shielding layer is formed porously, which can prevent the occurrence of cracks in the light shielding layer due to a difference in coefficient of thermal expansion between the light shielding layer and the low-expansion crystallized glass plate.

However, if a porous light shielding layer is employed, an adhesion mark of a temperature sensor (thermocouple) attached to an electromagnetic heating portion of the back surface of the top plate is conspicuous, which presents a problem of unfavorable appearance.

To solve the above problem, JP 2003 338360 A proposes, as a top plate for an IH cooking device, a top plate in which a porous light shielding layer is formed on a surface of a low-expansion crystallized glass plate and a heat-resistant resin layer is further formed on at least an electromagnetic heating portion of the light shielding layer.

Furthermore, since, as described previously, the low-expansion crystallized glass plate and the light shielding layer generally have different coefficients of thermal expansion, the light shielding layer is likely to develop cracks. Therefore, a sufficiently thick light shielding layer cannot be formed and a sufficient hideability may not be able to be achieved by the light shielding layer alone. In such a case, a heat-resistant resin layer for making up for a deficiency in light shielding effect may be formed on the light shielding layer.

JP 2003 225165 A discloses a cooking tray for a cooker such as oven-range or oven-toaster, wherein a nonadhesive paint film is provided on the surface of cooking trays of the cooker, and a heat reflective paint film is provided on the reverse side thereof. JP 2010 120846 A discloses a cooking face having a coating base comprising a glass ceramic or glass which has scratch resistance higher than that of a commercially available silicone layer, wherein a cover layer having uncrosslinked polysiloxane is applied onto the coating. JP 2010 009958 A discloses a top plate for a cooker equipped with an electromagnetic heating device, wherein on a surface of a low-expansion transparent crystallized glass plate, a porous light shielding layer is formed which is made of inorganic pigment and glass, wherein a heat resistant resin layer is formed at least on an electromagnetic heating part of the light shielding layer, and a forming material to form the light shielding layer has a mass ratio of inorganic pigment powder to glass powder of 5:5 to 6.9:3.1, and a film thickness of the light shielding layer is 1 to 5 µm.

### [Summary of Invention]

### [Technical Problem]

Meanwhile, in the IH cooking device, a cooking utensil, such as a pot, is directly heated by the electromagnetic heater. Therefore, the top plate is not directly heated by the electromagnetic heater. Furthermore, normally, the cooking utensil is heated while moisture-containing ingredients to be heated are put therein. Therefore, the temperature of the cooking utensil does not become very high. Hence, normally, the temperature of the top plate also does not rise much.

However, for example, if the cooking utensil is heated with no ingredient to be heated put therein, i.e., subjected to so-called empty heating, the cooking utensil may reach a high temperature and the temperature of the top plate may accordingly become high, such as 400°C or more. In this case, the heat-resistant resin layer may be thermally degraded to become discolored. If the heat-resistant resin layer becomes discolored, this discoloration of the heat-resistant resin layer is made visible from the use surface side, which presents a problem of poor appearance.

An object of the present invention is to provide a cooking device top plate in which a heat-resistant resin layer is placed over a principal surface of a glass substrate and the heat-resistant resin layer is less likely to undergo thermal degradation, and provide a method for manufacturing the cooking device top plate.

### [Solution to Problem]

A cooking device top plate according to the present invention includes a glass substrate and a heat-resistant resin layer. The heat-resistant resin layer is placed over a principal surface of the glass substrate. The heat-resistant resin layer contains color pigment powder, extender pigment powder, and a silicone resin. In the present invention, the color pigment powder in the heat-resistant resin layer has an average particle diameter of 0.3 µm or less. Therefore, for example, even if the cooking device top plate reaches a temperature as high as 400°C or more, the heat-resistant resin layer is less likely to be discolored and less likely to undergo thermal degradation. Thus, a cooking device top plate having high thermal resistance can be realized.

In the present invention, the "glass substrate" includes a crystallized glass substrate.

In the present invention, the cooking device top plate may further include an inorganic light shielding layer interposed between the glass substrate and the heat-resistant resin layer. With the use of a cooking device top plate having this structure, members disposed inside the cooking device can be more effectively hidden and the aesthetic aspect of the cooking device can be further improved.

The "inorganic light shielding layer" refers to a layer that absorbs or reflects at least part of incident light. However, in the present invention, the "inorganic light shielding layer" is not limited to a layer that absorbs or reflects all of incident light.

In the present invention, a proportion of the silicone resin in the heat-resistant resin layer is preferably within a range from 30% by mass or more to 70% by mass or less.

In the present invention, a proportion of the color pigment powder having an average particle diameter of 0.3 µm or less in the heat-resistant resin layer is preferably within a range from 10% by mass or more to 35% by mass or less.

In the present invention, a proportion of the extender pigment powder in the heat-resistant resin layer is preferably within a range from 15% by mass or more to 35% by mass or less.

A method for manufacturing a cooking device top plate according to the present invention is a method for manufacturing a cooking device top plate including a glass substrate and a heat-resistant resin layer placed over a principal surface of the glass substrate and includes the steps of: preparing a paste containing color pigment powder having an average particle diameter of 0.3 µm or less, extender pigment powder, and a silicone resin; and applying the paste on a principal surface of the glass substrate and drying the paste to form a heat-resistant resin layer.

### [Advantageous Effects of Invention]

The present invention enables provision of: a cooking device top plate in which a heat-resistant resin layer is placed over a principal surface of a glass substrate and the heat-resistant resin layer is less likely to undergo thermal degradation; and a method for manufacturing the cooking device top plate.

### [Brief Description of Drawings]

[Fig. 1]

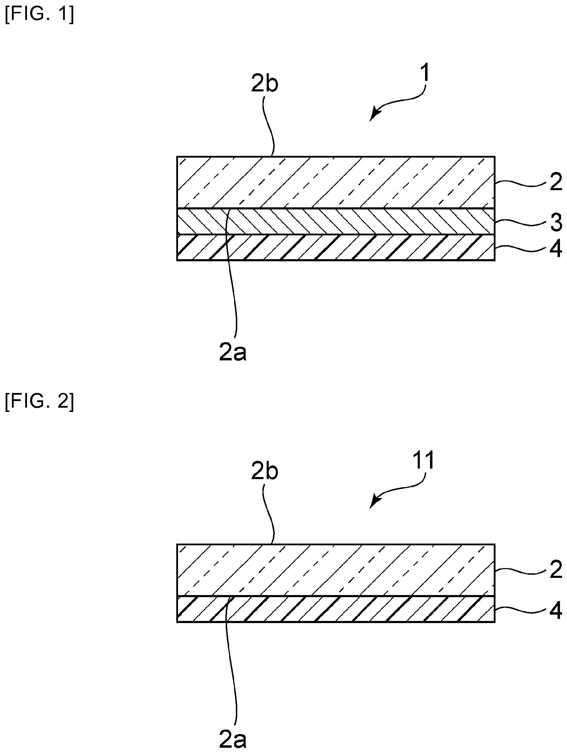

   Fig. 1 is a schematic front cross-sectional view showing a cooking device top plate according to a first embodiment of the present invention.
[Fig. 2]
   Fig. 2 is a schematic front cross-sectional view showing a cooking device top plate according to a second embodiment of the present invention.

### [Description of Embodiments]

Hereinafter, a description will be given of preferred embodiments. However, the following embodiments are merely illustrative and the present invention is not limited to the following embodiments. Throughout the drawings, members having substantially the same functions may be referred to by the same reference characters.

### (First Embodiment)

As shown in Fig. 1, a cooking device top plate 1 (hereinafter, the "cooking device top plate 1" is referred to simply as the "top plate 1") includes a glass substrate 2. The glass substrate 2 has a cooking surface 2b as one of the principal surfaces and a back surface 2a as the other principal surface. The cooking surface 2b is a surface on the side where a cooking utensil, such as a pot or a frying pan, is to be put. On the other hand, the back surface 2a is a surface on the side close to the inside of the cooking device. The cooking surface 2b and the back surface 2a are opposed to each other.

In this embodiment, an inorganic light shielding layer 3 is provided on the back surface 2a of the glass substrate 2. A heat-resistant resin layer 4 is provided on the inorganic light shielding layer 3. In this embodiment, the heat-resistant resin layer 4 is formed over the entire back surface 2a of the glass substrate 2.

The glass substrate 2 transmits at least part of light within a wavelength range of 450 nm to 700 nm. The glass substrate 2 may be clear and colored, but is preferably clear and colorless from the viewpoint of further improving the aesthetic aspect of the top plate 1. The "clear and colorless" means that the light transmittance within a visible wavelength range of 450 nm to 700 nm is 75% or more.

The top plate 1 undergoes repeated heating and cooling. Therefore, the glass substrate 2 preferably has high thermal resistance and a low coefficient of thermal expansion. Specifically, the softening temperature of the glass substrate 2 is preferably 700°C or more and more preferably 750°C or more. Furthermore, the average coefficient of linear thermal expansion of the glass substrate 2 at 30°C to 750°C is preferably within a range of -10 × 10⁻⁷/°C to +40 × 10⁻⁷/°C and more preferably -10 × 10⁻⁷/°C to +20 × 10⁻⁷/°C. Therefore, the glass substrate 2 is preferably made of a glass having a high glass transition temperature and low expansibility or made of a low-expansion crystallized glass. A specific example of the low-expansion crystallized glass is N-0 manufactured by Nippon Electric Glass Co., Ltd. Borosilicate glass or the like may be used as the glass substrate 2.

No particular limitation is placed on the type of the inorganic light shielding layer 3 so long as it is made of an inorganic material and has a low visible light transmittance. The inorganic light shielding layer 3 can be formed of, for example, a metal film, such as titanium. Alternately, the inorganic light shielding layer 3 can be formed of a layer that contains an inorganic pigment and a glass . In this case, examples that can be used as the inorganic pigment are Cu-Cr-Mn-based black inorganic pigments. On the other hand, examples that can be used as the glass are powdered B₂O₃-SiO₂-based glasses.

Furthermore, the inorganic light shielding layer 3 may be a porous film or a dense film having substantially no pore.

The thickness of the inorganic light shielding layer 3 is not limited particularly. The thickness of the inorganic light shielding layer 3 can be appropriately selected according to, for example, the light transmittance, mechanical strength, coefficient of thermal expansion or other properties of the inorganic light shielding layer 3. The inorganic light shielding layer 3 generally has a different coefficient of thermal expansion from the glass substrate 2. Therefore, the inorganic light shielding layer 3 may be damaged by repeated heating and cooling.

From the viewpoint of further reducing the damage, the inorganic light shielding layer 3 is preferably thin. The thickness of the inorganic light shielding layer 3 is preferably within a range from 1 µm or more to 15 µm or less and more preferably within a range from 3 µm or more to 10 µm or less.

The heat-resistant resin layer 4 contains color pigment powder, extender pigment powder, and a silicone resin. In the heat-resistant resin layer 4, the color pigment powder and the extender pigment powder are dispersed in the silicone resin.

The color pigment powder is inorganic pigment powder. In this embodiment, the average particle diameter of the color pigment powder is 0.3 µm or less. The average particle diameter can be measured by the laser diffraction method or by reading from an image taken with an electron microscope.

As described above, in this embodiment, the average particle diameter of the color pigment powder in the heat-resistant resin layer 4 is 0.3 µm or less. Therefore, as also confirmed by Examples below, even if, for example, the top plate 1 reaches a temperature as high as 400°C or more, the heat-resistant resin layer 4 is less likely to be discolored and less likely to be thermally degraded. Thus, a top plate 1 having high thermal resistance can be obtained. If the average particle diameter of the color pigment powder in the heat-resistant resin layer 4 exceeds the upper limit, the discoloration of the heat-resistant resin layer 4 when the top plate 1 reaches a high temperature cannot sufficiently be prevented.

From the viewpoint of making the heat-resistant resin layer 4 more difficult to discolor and further preventing its thermal degradation, the average particle diameter of the color pigment powder in the heat-resistant resin layer 4 is more preferably 0.2 µm or less.

The lower limit of the average particle diameter of the color pigment powder in the heat-resistant resin layer 4 is not limited, but the lower limit is preferably 0.05 µm or more, and more preferably 0.1 µm or more. If the average particle diameter of the color pigment powder in the heat-resistant resin layer 4 is too small, a paste produced by a manufacturing method described later may have a high viscosity and printability may thus become low.

The heat-resistant resin layer 4 may further contain color pigment powder having an average particle diameter larger than 0.3 µm. In this case, the content of color pigment powder having an average particle diameter of 0.3 µm or less in the whole color pigment powder is preferably 50% by mass or more. Thus, the heat-resistant resin layer 4 can be made more difficult to discolor and its thermal degradation can be further prevented.

The content (proportion) of color pigment powder having an average particle diameter of 0.3 µm or less in the heat-resistant resin layer 4 is preferably within a range from 10% by mass or more to 35% by mass or less, and more preferably within a range from 20% by mass or more to 30% by mass or less. When the content of color pigment powder having an average particle diameter of 0.3 µm or less is within the above range, the heat-resistant resin layer 4 can be made still more difficult to discolor and its thermal degradation can be still further prevented. The content of color pigment powder having an average particle diameter of 0.3 µm or less is the content with 100% by mass representing the amount of the heat-resistant resin layer.

The type of the color pigment powder contained in the heat-resistant resin layer 4 is not limited so long as it is a colored inorganic material. Examples of the color pigment powder include white pigment powders, such as TiO₂ powder, ZrO₂ powder, and ZrSiO₄ powder, Co-containing blue inorganic pigment powders, Co-containing green inorganic pigment powders, Ti-Sb-Cr-based yellow inorganic pigment powders, Ti-Ni-based yellow inorganic pigment powders, Co-Si-based red inorganic pigment powders, Fe-containing brown inorganic pigment powders, and Cu-containing black inorganic pigment powders.

Specific examples of the Co-containing blue inorganic pigment powders include Co-Al-based inorganic pigment powders and Co-Al-Ti-based inorganic pigment powders. A specific example of the Co-Al-based inorganic pigment powders is CoAl₂O₄ powder. A specific example of the Co-Al-Ti-based inorganic pigment powders is CoAl₂O₄-TiO₂-Li₂O powder.

Specific examples of the Co-containing green inorganic pigment powders include Co-Al-Cr-based inorganic pigment powders and Co-Ni-Ti-Zn-based inorganic pigment powders. A specific example of the Co-Al-Cr-based inorganic pigment powders is Co(Al,Cr)₂O₄ powder. A specific example of the Co-Ni-Ti-Zn-based inorganic pigment powders is (Co,Ni,Zn)₂TiO₄ powder.

Specific examples of the Fe-containing brown inorganic pigment powders include Fe-Zn-based inorganic pigment powders. A specific example of the Fe-Zn-based inorganic pigment powders is (Zn, Fe)Fe₂O₄ powder.

Specific examples of the Cu-containing black inorganic pigment powders include Cu-Cr-based inorganic pigment powders and Cu-Fe-based inorganic pigment powders. Specific examples of the Cu-Cr-based inorganic pigment powders include Cu (Cr, Mn) ₂O₄ powder and Cu-Cr-Mn powder. On the other hand, a specific example of the Cu-Fe-based inorganic pigment powders is Cu-Fe-Mn powder.

The inorganic pigment powders as described above can be used singly or in a mixture of two or more of them as the color pigment powder.

The extender pigment powder is different inorganic pigment powder from the color pigment powder. No particular limitation is placed on the type of the extender pigment powder and, for example, talc, mica or the like can be used as the extender pigment powder.

The content (proportion) of the extender pigment powder in the heat-resistant resin layer 4 is preferably within a range from 15% by mass or more to 35% by mass or less. The content of the extender pigment powder is more preferably within a range from 20% by mass or more to 30% by mass or less, and still more preferably within a range from 25% by mass or more to 30% by mass or less. When the content of the extender pigment powder is within the above range, the heat-resistant resin layer 4 can be made still more difficult to discolor and its thermal degradation can be still further prevented. The content of the extender pigment powder is the content with 100% by mass representing the amount of the heat-resistant resin layer.

The silicone resin contained in the heat-resistant resin layer 4 preferably has high thermal resistance. The silicone resin contained in the heat-resistant resin layer 4 is preferably, for example, a silicone resin in which a functional group bound directly to a silicon atom is at least one of a methyl group and a phenyl group. In this case, the discoloration of the heat-resistant resin layer 4 when the top plate 1 reaches a high temperature can be more effectively prevented.

The content (proportion) of the silicone resin in the heat-resistant resin layer 4 is preferably within a range from 30% by mass to 70% by mass. The content of the silicone resin is more preferably within a range from 40% by mass to 60% by mass, and more preferably within a range from 45° by mass to 50% by mass. When the content of the silicone resin is within the above range, the heat-resistant resin layer 4 can be made more difficult to discolor and its thermal degradation can be further prevented. The content of the silicone resin is the content with 100% by mass representing the amount of the heat-resistant resin layer.

The thickness of the heat-resistant resin layer 4 is not limited in particular. The thickness of the heat-resistant resin layer 4 can be appropriately selected according to the light transmittance or other properties of the heat-resistant resin layer 4. The thickness of the heat-resistant resin layer 4 can be, for example, within a range from about 1 µm to about 15 µm.

### (Manufacturing Method)

The top plate 1 can be manufactured, for example, by the following manufacturing method.

First, an inorganic light shielding layer 3 is formed on the back surface 2a of a glass substrate 2. Next, a heat-resistant resin layer 4 is formed on the inorganic light shielding layer 3.

Particularly, in the manufacturing method according to this embodiment, a paste containing color pigment powder having an average particle diameter of 0.3 µm or less, extender pigment powder, and a silicone resin is prepared and the prepared paste is applied on the back surface 2a of the glass substrate 2 and dried, thus a heat-resistant resin layer 4 is formed.

Since the average particle diameter of the color pigment powder for use in the manufacturing method according to the present invention is 0.3 µm or less, even if the top plate 1 which is obtained reaches a temperature as high as 400°C or more, the heat-resistant resin layer 4 is less likely to be discolored and less likely to be thermally degraded. Therefore, the top plate 1 having high thermal resistance can be manufactured.

The method for forming the inorganic light shielding layer 3 is not limited in particular. The inorganic light shielding layer 3 can be formed, for example, by the following method.

First, a solvent is added to a powder mixture of inorganic pigment powder and glass powder to turn the powder mixture into paste. The obtained paste is applied on the back surface 2a of the glass substrate 2, for example, using screen printing and then dried. Thereafter, the paste is fired, so that the inorganic light shielding layer 3 can be formed. The firing temperature and the firing time can be appropriately selected according to the composition of the glass powder to be used or other conditions. The firing temperature can be, for example, within a range from about 200°C to about 850°C. The firing time can be, for example, within a range from about 10 minutes to about an hour.

If the inorganic light shielding layer 3 is formed of a metal film, it can be formed, for example, by sputtering or the CVD process.

The method for forming the heat-resistant resin layer 4 is not limited in particular, so long as color pigment powder having an average particle diameter of 0.3 µm or less, extender pigment powder, and a silicone resin are used. The heat-resistant resin layer 4 can be formed, for example, by applying a silicone resin containing color pigment powder and extender pigment powder dispersed therein on the inorganic light shielding layer 3, for example, using screen printing, and drying the applied silicone resin. The drying temperature can be, for example, within a range from about 50°C to about 100°C. The drying time can be, for example, within a range from about 10 minutes to about an hour. Depending on the composition of the heat-resistant resin layer 4, the firing may be preferably performed after the drying.

Furthermore, the speed of application and viscosity of the silicone resin containing color pigment powder and extender pigment powder dispersed therein must be appropriately selected according to the amount of color pigment powder and extender pigment powder contained in the heat-resistant resin layer 4. For example, if the content of color pigment powder and extender pigment powder in the heat-resistant resin layer 4 is high, it is preferred to lower the viscosity of the silicone resin and decrease the speed of application of the silicone resin.

As described previously, in this embodiment, the average particle diameter of the color pigment powder in the heat-resistant resin layer 4 is 0.3 µm or less. Therefore, as also confirmed by Examples below, even if, for example, the top plate 1 reaches a temperature as high as 400°C or more, the heat-resistant resin layer 4 is less likely to be discolored and less likely to be thermally degraded. Thus, a top plate 1 having high thermal resistance can be realized. Furthermore, since the average particle diameter of the color pigment powder in the heat-resistant resin layer 4 is 0.3 µm or less, the heat-resistant resin layer 4 has a high hardness even under high temperature. Therefore, the detachment of the heat-resistant resin layer 4 from the inorganic light shielding layer 3 or the glass substrate 2 is less likely to occur.

Moreover, because the heat-resistant resin layer 4 has fluidity until it is dried, if the heat-resistant resin layer 4 is provided in the manner as in this embodiment, the back surface 2a of the top plate 1 is flattened. Therefore, a top plate 1 having a more excellent aesthetic aspect can be realized.

Furthermore, in this embodiment, the inorganic light shielding layer 3 is provided together with the heat-resistant resin layer 4. Therefore, when viewed from the cooking surface 2b side, members disposed inside a cooking device, such as an electromagnetic cooking device, can be more effectively hidden and the aesthetic aspect of the cooking device, such as an electromagnetic cooking device, can be further improved.

The description in this embodiment has been given of the case where the heat-resistant resin layer 4 is formed over the entire back surface 2a of the glass substrate 2. However, the present invention is not limited to this structure. The heat-resistant resin layer 4 may be formed, for example, over a portion of the back surface 2a of the glass substrate 2. For example, if the cooking device is an electromagnetic cooking device, the heat-resistant resin layer 4 may be provided only at an electromagnetic heating portion of the top plate 1. Alternatively, for example, if the inorganic light shielding layer 3 is formed of a porous film, the heat-resistant resin layer 4 may be provided at least under a site of attachment of a temperature sensor (thermocouple) attached to the electromagnetic heating portion of the back surface 2a of the top plate 1. In this case, an adhesion mark of the temperature sensor can be made inconspicuous, thus the appearance of the top plate 1 is improved.

Furthermore, the description in this embodiment has been given of the case where no film is formed on the cooking surface 2b of the glass substrate 2. However, the present invention is not limited to this structure. For example, a decorative coating may be formed on the cooking surface 2b, as necessary, for the purpose of improving the design, indicating the positions of heaters or other purposes.

Moreover, an additional film may be formed on the back surface 2a side of the glass substrate 2. For example, a protective layer or the like for the heat-resistant resin layer 4 may be formed on the heat-resistant resin layer 4 or an adhesion layer or the like may be formed between the heat-resistant resin layer 4 and the inorganic light shielding layer 3. Furthermore, a decorative coating may be formed between the inorganic light shielding layer 3 and the glass substrate 2, as necessary, for the purpose of improving the design, indicating the positions of heaters or other purposes.

### (Second Embodiment)

Fig. 2 is a schematic cross-sectional view showing a cooking device top plate 11 according to a second embodiment of the present invention. As shown in Fig. 2, in the cooking device top plate 11, the inorganic light shielding layer 3 is not provided and the heat-resistant resin layer 4 is provided directly on the back surface 2a of the glass substrate 2.

In the second embodiment, the average particle diameter of the color pigment powder in the heat-resistant resin layer 4 is also 0.3 µm or less. Therefore, as confirmed by Examples below, even if, for example, the top plate 1 reaches a temperature as high as 400°C or more, the heat-resistant resin layer 4 is less likely to be discolored and less likely to be thermally degraded.

As shown in the second embodiment, the heat-resistant resin layer 4 may be provided directly on the back surface 2a of the glass substrate 2. Alternatively, as shown in the first embodiment, the heat-resistant resin layer 4 may be provided through the inorganic light shielding layer 3 over the back surface 2a of the glass substrate 2.

Hereinafter, a description will be given in further detail of the present invention with reference to examples. However, the following examples are merely illustrative. The present invention is not at all limited by the following examples .

### (Example 1)

First, 23.4% by mass Cu-Fe-Mn-based black pigment powder (average particle diameter: 0.2 µm), 23.4% by mass talc as extender pigment powder, and 29.9% by mass (resin solid content) silicone resin were mixed and 23.2% by mass organic solvent was added to the mixture to prepare a paste. Next, this paste was screen-printed on the whole of a transparent crystallized glass plate (manufactured by Nippon Electric Glass Co., Ltd., product name: "N-0", average coefficient of linear thermal expansion at 30°C to 750°C: 0.5 × 10⁻⁷/°C) to have a thickness of 4 µm. Thereafter, the paste was dried at 150°C for five minutes and then fired at 300°C for 30 minutes to form a heat-resistant resin layer, thus completing a cooking device top plate (top plate).

The produced top plate was incorporated into an electromagnetic heater and held at 500°C for 10 minutes by heating an empty pan on the top plate (empty heating test) . Thereafter, a visual observation was made, from the cooking surface side of the top plate, of whether the heat-resistant resin layer was discolored. The discoloration of the heat-resistant resin layer was evaluated based on the following criteria for evaluation. The results are shown in Table 1 below. The amount of organic solvent mixed in Table 1 includes the amount of organic solvent contained in the resin. Furthermore, the proportion of extender pigment powder in inorganic pigment powder refers to the proportion of extender pigment powder with 100% by mass representing the total amount of color pigment powder and extender pigment powder.

Criteria for evaluation of discoloration:
double circle ... no discoloration of the heat-resistant resin layer;
circle ... vague discoloration of the heat-resistant resin layer; and
cross ... distinct discoloration of the heat-resistant resin layer

Furthermore, the pencil hardness in Table 1 was measured in conformity with JIS K 5600-5-4: 1999.

### (Examples 2 to 4)

A cooking device top plate was produced in the same manner as in Example 1 except that the amount of color pigment powder mixed, the amount of extender pigment powder mixed, the amount of silicone resin mixed, and the amount of organic solvent mixed were changed to the proportions shown in Table 1 below, and the same empty heating test and pencil hardness measurement as in Example 1 were made. The results are shown in Table 1 below.

### (Example 5)

A cooking device top plate was produced in the same manner as in Example 2 except that 10% by mass Cu-Fe-Mn-based black pigment powder having an average particle diameter of 0.2 µm and 10% by mass Cu-Cr-Mn-based black pigment powder having an average particle diameter of 0.5 µm were used in combination as color pigment powder, and the same empty heating test and pencil hardness measurement as in Example 1 were made. The results are shown in Table 1 below.

### (Comparative Examples 1 to 6 and 8 to 11)

A cooking device top plate was produced in the same manner as in Example 1 except that Cu-Cr-Mn-based black pigment powder (average particle diameter: 0.5 µm) was used as color pigment powder and that the amount of color pigment powder mixed, the amount of extender pigment powder mixed, the amount of silicone resin mixed, and the amount of organic solvent mixed were changed to the proportions shown in Table 1 below, and the same empty heating test and pencil hardness measurement as in Example 1 were made. The results are shown in Table 1 below.

### (Comparative Example 7)

A cooking device top plate was produced in the same manner as in Example 1 except that Cu-Fe-Mn-based black pigment powder having an average particle diameter of 0.5 µm was used as color pigment powder, and the same empty heating test and pencil hardness measurement as in Example 1 were made. The results are shown in Table 1 below.

**[Table 1]**

| | | Ex.1 | Ex.2 | Ex.3 | Ex.4 | Ex.5 | Comp.Ex.1 | Comp.Ex.2 | Comp.Ex.3 | Comp.Ex.4 | Comp.Ex.5 | Comp.Ex.6 | Comp.Ex.7 | Comp.Ex.8 | Comp.Ex.9 | Comp.Ex.10 | Comp.Ex.11 |
|---|---|---|---|---|---|---|---|---|---|---|---|---|---|---|---|---|---|
| Silicone resin (resin solid content)(% by mass) | | 29.9 | 34.4 | 37.6 | 40.2 | 34.4 | 29.9 | 34.4 | 23.7 | 29.9 | 29.9 | 29.9 | 29.9 | 34.4 | 36.1 | 37.7 | 39.4 |
| Extender pigment powder | talc(% by mass) | 23.4 | 20.0 | 17.4 | 15.4 | 20.0 | 23.4 | 20.0 | 28.4 | 11.7 | 35.2 | - | 23.4 | 20.0 | 18.8 | 122 | 11.2 |
| Color pigment powder | Cu-Cr-Mn 0.5 *µ*m-particte diameter(% by mass) | - | - | - | - | 10.0 | 23.4 | 20.0 | 28.4 | 35.2 | 11.7 | 48.9 | - | 20.0 | 18.6 | 21.9 | 20.2 |
| | Cu-Fe-Mn 0.5 *µ*m-particle diameter(% by mass) | - | - | - | - | - | - | - | - | - | - | - | 23.4 | - | - | - | - |
| | Cu-Fe-Mn 0.2 *µ*m-particle diameter(% by mass) | 23.4 | 20.0 | 17.4 | 15.4 | 10.0 | - | - | - | - | - | - | - | - | - | - | - |
| Organic solvent(% by mass) | | 23.2 | 25.7 | 27.6 | 29.1 | 25.7 | 23.2 | 25.7 | 19.6 | 23.2 | 23.2 | 23.2 | 23.2 | 25.7 | ' 26.7 | 28.2 | 29.1 |
| Proportion of color pigment powder (0.3 *µ*m or less) in heat-resistant resin layer(% by mass | | 31 | 27 | 24 | 22 | 13 | 0 | 0 | 0 | 0 | 0 | 0 | 0 | 0 | 0 | 0 | 0 |
| Proportion of silicone resin in heat-resistant resin layer(% by mass) | | 39 | 46 | 52 | 57 | 46 | 39 | 46 | 29 | 39 | 39 | 39 | 39 | 46 | 49 | 53 | 56 |
| Proportion of extender pigment powder in heat-resistant resin layer(% by mass) | | 31 | 27 | 24 | 22 | 27 | 31 | 27 | 35 | 15 | 31 | 0 | 31 | 27 | 25 | 17 | 16 |
| Proportion of color pigment powder of 0.3 *µ*m or less diameter in color pigment powder(% by mass) | | 100 | 100 | 100 | 100 | 50 | 0 | 0 | 0 | 0 | 0 | 0 | 0 | 0 | 0 | 0 | D |
| Proportion of extender pigment powder in inorganic pigment powder(% by mass) | | 50 | 50 | 50 | 50 | 50 | 50 | 50 | 50 | 25 | 50 | 0 | 50 | 50 | 50 | 36 | 36 |
| Discoloration | | 0 | ⊚ | ⊚ | ⊚ | ○ | × | × | × | × | × | × | × | × | × | × | × |
| Pencil hardness | | 3H | 5H | 3H | 3H | H | F | F | F | 5H | F | 8H | 2H | F | F | H | 2H |

It can be seen from the results of Examples and Comparative Examples in Table 1 that when the average particle diameter of color pigment powder in the heat-resistant resin layer is within a range of 0.3 µm or less according to the present invention, a cooking device top plate can be realized in which the heat-resistant resin layer is less likely to be discolored even under high temperature and has high thermal resistance.

### [Reference Signs List]

- 1, 11: cooking device top plate
- 2: glass substrate
- 2a: back surface
- 2b: cooking surface
- 3: inorganic light shielding layer
- 4: heat-resistant resin layer

## Claims

1. A cooking device top plate (1, 11) comprising a glass substrate (2) and a heat-resistant resin layer (4) placed over a principal surface (2a, 2b) of the glass substrate (2), wherein
the heat-resistant resin layer (4) contains color pigment powder, extender pigment powder, and a silicone resin, and
the color pigment powder in the heat-resistant resin layer (4) has an average particle diameter of 0.3 µm or less.

2. The cooking device top plate (11) according to claim 1, further comprising an inorganic light shielding layer (3) interposed between the glass substrate (2) and the heat-resistant resin layer (4).

3. The cooking device top plate (1, 11) according to claim 1 or 2, wherein a proportion of the silicone resin in the heat-resistant resin layer (4) is within a range from 30% by mass or more to 70% by mass or less.

4. The cooking device top plate (1, 11) according to any one of claims 1 to 3, wherein a proportion of the color pigment powder having an average particle diameter of 0.3 µm or less in the heat-resistant resin layer (4) is within a range from 10% by mass or more to 35% by mass or less.

5. The cooking device top plate (1, 11) according to any one of claims 1 to 4, wherein a proportion of the extender pigment powder in the heat-resistant resin layer (4) is within a range from 15% by mass or more to 35% by mass or less.

6. A method for manufacturing a cooking device top plate (1, 11) comprising a glass substrate (2) and a heat-resistant resin layer (4) placed over a principal surface (2a, 2b) of the glass substrate (2), the method comprising the steps of:
preparing a paste containing color pigment powder having an average particle diameter of 0.3 µm or less, extender pigment powder, and a silicone resin; and
applying the paste on a principal surface (2a, 2b) of the glass substrate (2) and drying the paste to form a heat-resistant resin layer (4).

## Patentansprüche

1. Kochgerät-Oberplatte (1, 11), umfassend ein Glassubstrat (2) und eine wärmebeständige Harzschicht (4), die über einer Hauptoberfläche (2a, 2b) des Glassubstrats (2) angeordnet ist, wobei
die wärmebeständige Harzschicht (4) Farbpigmentpulver, Füllpigmentpulver und ein Silikonharz enthält und
das Farbpigmentpulver in der wärmebeständigen Harzschicht (4) einen durchschnittlichen Teilchendurchmesser von 0,3 µm oder weniger aufweist.

2. Kochgerät-Oberplatte (11) nach Anspruch 1, ferner umfassend eine anorganische Lichtabschirmschicht (3), die zwischen dem Glassubstrat (2) und der wärmebeständigen Harzschicht (4) eingefügt ist.

3. Kochgerät-Oberplatte (1, 11) nach Anspruch 1 oder 2, wobei ein Anteil des Silikonharzes in der wärmebeständigen Harzschicht (4) in einem Bereich von 30 Massenprozent oder mehr bis 70 Massenprozent oder weniger liegt.

4. Kochgerät-Oberplatte (1, 11) nach einem der Ansprüche 1 bis 3, wobei ein Anteil des Farbpigmentpulvers mit einem durchschnittlichen Teilchendurchmesser von 0,3 µm oder weniger in der wärmebeständigen Harzschicht (4) in einem Bereich von 10 Massenprozent oder mehr bis 35 Massenprozent oder weniger liegt.

5. Kochgerät-Oberplatte (1, 11) nach einem der Ansprüche 1 bis 4, wobei ein Anteil des Füllpigmentpulvers in der wärmebeständigen Harzschicht (4) in einem Bereich von 15 Massenprozent oder mehr bis 35 Massenprozent oder weniger liegt.

6. Verfahren zur Herstellung einer Kochgerät-Oberplatte (1, 11), umfassend ein Glassubstrat (2) und eine wärmebeständige Harzschicht (4), die über einer Hauptoberfläche (2a, 2b) des Glassubstrats (2) angeordnet ist, wobei das Verfahren die Schritte umfasst:
Herstellen einer Paste, die Farbpigmentpulver mit einem durchschnittlichen Teilchendurchmesser von 0,3 µm oder weniger, Füllpigmentpulver und ein Silikonharz enthält, und
Auftragen der Paste auf eine Hauptoberfläche (2a, 2b) des Glassubstrats (2) und Trocknen der Paste, um eine wärmebeständige Harzschicht (4) zu bilden.

## Revendications

1. Plaque supérieure de dispositif de cuisson (1, 11) comprenant un substrat en verre (2) et une couche de résine thermorésistante (4) placée par-dessus une surface principale (2a, 2b) du substrat en verre (2), plaque supérieure dans laquelle :
la couche de résine thermorésistante (4) contient une poudre de pigment de couleur, une poudre de pigment de charge et une résine de silicone, et
la poudre de pigment de couleur contenue dans la couche de résine thermorésistante (4) a un diamètre de particule moyen de 0,3 µm ou moins.

2. Plaque supérieure de dispositif de cuisson (11) selon la revendication 1, comprenant en outre une couche de protection contre la lumière inorganique (3), ladite couche de protection étant interposée entre le substrat en verre (2) et la couche de résine thermorésistante (4).

3. Plaque supérieure de dispositif de cuisson (1, 11) selon la revendication 1 ou 2, plaque supérieure dans laquelle une proportion de la résine de silicone contenue dans la couche de résine thermorésistante (4) se situe dans une plage allant de 30 % en masse ou plus à 70 % en masse ou moins.

4. Plaque supérieure de dispositif de cuisson (1, 11) selon l'une quelconque des revendications 1 à 3, plaque supérieure dans laquelle une proportion de la poudre de pigment de couleur ayant un diamètre de particule moyen de 0,3 µm ou moins dans la couche de résine thermorésistante (4) se situe dans une plage allant de 10 % en masse ou plus à 35 % en masse ou moins.

5. Plaque supérieure de dispositif de cuisson (1, 11) selon l'une quelconque des revendications 1 à 4, plaque supérieure dans laquelle une proportion de la poudre de pigment de charge contenue dans la couche de résine thermorésistante (4) se situe dans une plage allant de 15 % en masse ou plus à 35 % en masse ou moins.

6. Procédé de fabrication d'une plaque supérieure de dispositif de cuisson (1, 11) comprenant un substrat en verre (2) et une couche de résine thermorésistante (4) placée par-dessus une surface principale (2a, 2b) du substrat en verre (2), le procédé comprenant les étapes consistant :
à préparer une pâte contenant une poudre de pigment de couleur ayant un diamètre de particule moyen de 0,3 µm ou moins, une poudre de pigment de charge et une résine de silicone ; et
à appliquer la pâte sur une surface principale (2a, 2b) du substrat en verre (2) et à sécher la pâte pour former une couche de résine thermorésistante (4).
